# EUROPÄISCHE PATENTSCHRIFT

(11) **EP 3 645 372 B1**
(45) Veröffentlichungstag und Bekanntmachung des Hinweises auf die Patenterteilung: **28.07.2021**
(21) Anmeldenummer: 18735243.0
(22) Anmeldetag: 26.06.2018
(51) Int. Cl.: B62D 1/20, F16D 3/06, F16C 3/03

(54) **LENKWELLE FÜR EIN KRAFTFAHRZEUG UND VERFAHREN ZUM HERSTELLEN**
STEERING SHAFT FOR A MOTOR VEHICLE AND METHOD FOR THE PRODUCTION THEREOF
ARBRE DE DIRECTION DE VÉHICULE À MOTEUR ET SON PROCÉDÉ DE FABRICATION

(30) Priorität: 29.06.2017 DE 102017114534
(43) Veröffentlichungstag der Anmeldung: 06.05.2020
(73) Patentinhaber: thyssenkrupp Presta AG, 9492 Eschen (LI); thyssenkrupp AG, 45143 Essen (DE)
(72) Erfinder: DUROT, Janick, 9443 Widnau (CH); BREUER, Marius, 48307 Rochester Hills, Michigan (US)
(74) Vertreter: thyssenkrupp Intellectual Property GmbH
(86) Internationale Anmeldenummer: PCT/EP2018/067120
(87) Internationale Veröffentlichungsnummer: WO 2019/002298

(56) Entgegenhaltungen:
- DE-U1-202010 017 747
- US-A1- 2006 243 089

## Beschreibung

Die Erfindung betrifft eine Lenkwelle für ein Kraftfahrzeug und ein Verfahren zum Herstellen einer solchen Lenkwelle.

### Hintergrund

Eine derartige Lenkwelle sowie ein Verfahren zum Herstellen sind aus dem Dokument WO 2016 / 058723 A1 bekannt. Die Lenkwelle weist eine Innenwelle und eine Außenwelle auf. Auf der Innenwelle ist im Bereich eines Endabschnitts eine Profilhülse angeordnet und fixiert. Die Innenwelle ist mit der hierauf angeordneten Profilhülse endseitig in die Außenwelle eingesteckt, derart, dass die Innenwelle zur Längeneinstellung zusammen mit der Profilhülse in der Außenwelle in axialer Richtung verlagerbar ist.

Eine Lenkwelle für ein Kraftfahrzeug ist weiterhin in dem Dokument DE 20 2010 017 747 U1 offenbart. Die Profilhülse, welche auch als Gleithülse bezeichnet werden kann, ist auf der Außenfläche der Innenwelle mithilfe von Rastnasen fixiert, die auf der Außenfläche der Innenwelle angeordnet sind und jeweils einem Ende der Profilhülse gegenüber liegen, wenn die Profilhülse auf der Außenfläche der Innenwelle angeordnet ist, sodass die Profilhülse auf der Innenwelle in axialer Richtung gesichert ist. Es hat sich gezeigt, dass diese Art der Befestigung der Profilhülse auf der Innenwelle zu Problemen führt, insbesondere wegen unterschiedlicher thermischer Ausdehnungskoeffizienten der verwendeten Materialien für Innenwelle und Profilhülse. Es kommt zum Verspannen der Profilhülse bei Temperaturänderungen, sodass die Profilhülse sich in Zwangszuständen befindet.

Im Dokument DE 1 975 005 C1 ist eine weitere Lenkwelle mit einer zwischen Innenwelle und Außenwelle angeordneten Profilhülse offenbart.

Aus der US 2006/243089 A1 eine gattungsgemäße Lenkwelle bekannt, mit einer Innenwelle, einer Außenwelle, einer Profilhülse, die auf der Innenwelle angeordnet und hierauf fixiert ist, derart, dass die Innenwelle zusammen mit der Profilhülse gegenüber der Außenwelle in axialer Richtung verlagerbar ist, wobei die Innenwelle und die Außenwelle drehmomentenschlüssig unter Zwischenschaltung der Profilhülse gekoppelt sind, wobei die Profilhülse einen Durchbruch aufweist, in welchen ein auf einer Außenfläche der Innenwelle angeordneter Vorsprung die Profilhülse in ihrer Lage auf der Innenwelle zumindest in axialer Richtung sichernd eingreift. Dadurch, dass zur Fixierung der Profilhülse der Vorsprung nachträglich an der Innenwelle angebracht wird, entsteht ein nachteilig hoher Fertigungsaufwand. Somit offenbart die US2006/243089 A1 neben dem Oberbegriff des unabhängigen Anspruchs 1 auch in Bezug auf die Merkmale des unabhängigen Anspruchs 13 ein Verfahren zum Herstellen einer Lenkwelle für ein Kraftfahrzeug, das Verfahren aufweisend:
- Bereitstellen einer Innenwelle;
- Bereitstellen einer Außenwelle;
- Anordnen einer Profilhülse auf der Innenwelle, wobei die Profilhülse einen Durchbruch aufweist;
- Fixieren der Profilhülse auf der Innenwelle, wobei hierbei ein auf einer Außenfläche der Innenwelle angeordneter Vorsprung in dem Durchbruch der Profilhülse angeordnet und so die Profilhülse in ihrer Lage auf der Innenwelle zumindest in axialer Richtung gesichert wird; und
- Einführen der Innenwelle mit der Profilhülse in die Außenwelle derart, dass der Endabschnitt der Innenwelle zusammen mit der Profilhülse in der Außenhülle in axialer Richtung verlagerbar und die Profilhülse hierbei zwischen der Innenwelle und der Außenwelle angeordnet ist.

Aufgabe der Erfindung ist es, eine Lenkwelle für ein Kraftfahrzeug sowie ein Verfahren zum Herstellen anzugeben, bei denen eine verbesserte Fixierung der Profilhülse ermöglicht ist.

Zur Lösung der Aufgabe sind eine Lenkwelle für ein Kraftfahrzeug sowie ein Verfahren zum Herstellen nach den unabhängigen Ansprüchen 1 und 13 geschaffen. Vorteilhafte Weiterbildungen ergeben sich aus den jeweiligen Unteransprüchen.

Bei einer Lenkwelle für ein Kraftfahrzeug, mit
- einer Innenwelle;
- einer Außenwelle;
- einer Profilhülse, die auf der Innenwelle angeordnet und hierauf fixiert ist, derart, dass die Innenwelle zusammen mit der Profilhülse gegenüber der Außenwelle in axialer Richtung verlagerbar ist, wobei die Innenwelle und die Außenwelle drehmomentenschlüssig unter Zwischenschaltung der Profilhülse gekoppelt sind,
wobei die Profilhülse einen Durchbruch aufweist, in welchen ein auf einer Außenfläche der Innenwelle angeordneter Vorsprung die Profilhülse in ihrer Lage auf der Innenwelle zumindest in axialer Richtung sichernd eingreift, ist erfindungsgemäß vorgesehen, dass der Vorsprung und die Innenwelle als einstückiges integrales Bauteil ausgebildet sind.

Nach einem Aspekt ist eine Lenkwelle für ein Kraftfahrzeug geschaffen. Die Lenkwelle weist eine Innenwelle, eine Außenwelle und eine Profilhülse auf. Die Profilhülse ist auf der Innenwelle angeordnet und hierauf fixiert, derart, dass die Innenwelle zusammen mit der Profilhülse gegenüber der Außenwelle in axialer Richtung verlagerbar ist, wobei die Innenwelle und die Außenwelle drehmomentenschlüssig unter Zwischenschaltung der Profilhülse gekoppelt sind. Die Profilhülse weist einen Durchbruch auf, in welchen ein auf einer Außenfläche der Innenwelle angeordneter Vorsprung die Profilhülse in ihrer Lage auf der Innenwelle zumindest in axialer Richtung sichernd eingreift.

Nach einem weiteren Aspekt ist ein Verfahren zum Herstellen einer Lenkwelle für ein Kraftfahrzeug geschaffen. Bei dem Verfahren werden eine Innenwelle und eine Außenwelle bereitgestellt. Auf der Innenwelle wird eine Profilhülse angeordnet, die einen Durchbruch aufweist. Die Profilhülse wird auf der Innenwelle fixiert, wobei hierbei ein auf einer Außenfläche der Innenwelle angeordneter Vorsprung in dem Durchbruch der Profilhülse angeordnet und so die Profilhülse in ihrer Lage auf der Innenwelle zumindest in axialer Richtung gesichert wird. Die Innenwelle mit der Profilhülse wird in die Außenwelle eingeführt, derart, dass die Innenwelle zusammen mit der Profilhülse in der Außenwelle in axialer Richtung verlagerbar und die Profilhülse hierbei zwischen der Innenwelle und der Außenwelle angeordnet ist.

Die Innenwelle und die Außenwelle können jeweils ein Profil aufweisen, welches von einer kreiszylindrischen Form abweichend ist, so dass die Innenwelle und die Außenwelle unter Zwischenschaltung der Profilhülse drehmomentenschlüssig zur Übertragung eines Drehmoments ineinander greifen. Die Innenwelle weist bevorzugt ein Außenprofil auf, welches korrespondierend zu einem Innenprofil der Außenwelle ausgeführt ist.

Die Innenwelle kann als Hohlwelle oder als Vollwelle ausgebildet sein. Die Außenwelle ist als Hohlwelle ausgebildet.

Der Vorsprung ragt von einer äußeren Oberfläche der Innenwelle radial nach außen hervor und ragt zumindest teilweise in den Durchbruch der Profilhülse hinein.

Bevorzugt ist die Profilhülse im Bereich eines Endabschnitts der Innenwelle angeordnet und hierauf fixiert.

Unter der axialen Richtung oder der Längsrichtung ist in Richtung der Längsachse der Lenkwelle zu verstehen.

Der Durchbruch kann als einzelner Durchbruch oder als Durchbruch mit mehreren Teildurchbrüchen ausgebildet sein, wobei die mehreren Teildurchbrüche voneinander getrennt gebildet sein können. Im Fall mehrerer Teildurchbrüche können ein oder mehrere der Teildurchbrüche von einem zugeordneten Vorsprung auf der Außenfläche der Innenwelle durchgriffen sein, wenn die Profilhülse auf der Innenwelle fixiert ist.

Der Durchbruch kann in einem in Längsrichtung der Profilhülse mittleren Profilhülsenabschnitt angeordnet sein. Bei einer Ausführungsform kann eine thermisch bedingte Änderung einer Dimension der Profilhülse, insbesondere in axialer Richtung, so im Wesentlichen symmetrisch zur mittleren Lage des Durchbruchs der Profilhülse stattfinden, ohne den Sitz der Profilhülse auf der Innenwelle nachteilig zu beeinflussen. Der Durchbruch kann zumindest teilweise innerhalb eines mittleren Drittels der Profilhülse angeordnet sein. Das mittlere Drittel ergibt sich aus einer gleichmäßigen Aufteilung der Profilhülse in Längsrichtung in drei gleichgroße Abschnitte, wobei der mittlere Abschnitt das mittlere Drittel bildet.

Der Durchbruch kann mit einem Langloch gebildet sein. Der Durchbruch kann ein oder mehrere Langlöcher aufweisen, wobei mit Letzteren Teildurchbrüche gebildet sein können. In einer Ausführungsform sind Teildurchbrüche auf gegenüberliegenden Seiten der Profilhülse ausgebildet. Bei dem einen oder den mehreren Langlöchern können sich gegenüberliegende Längsseiten im Wesentlichen parallel zur Längsrichtung der Profilhülse erstrecken. Bei dieser oder anderen Ausführungsformen kann der Vorsprung hinsichtlich der Durchbruchsfläche diese im Wesentlichen vollständig erfassend ausgebildet sein.

Mit dem Vorsprung können in Längsrichtung der Profilhülse gegenüberliegende Endanschläge gebildet sein, die Enden des Durchbruchs zugeordnet sind und hieran zur Anlage kommen. Die gegenüberliegenden Endanschläge können an zugeordneten Enden des Langlochs zur Anlage kommen. Bei dieser oder anderen Ausführungsformen können die Enden des Durchbruchs gerade und quer zur Längsrichtung der Profilhülse verlaufen oder als gerundete Enden ausgebildet sein, beispielsweise mit einer Halbkreisform.

Der Vorsprung kann aus mehreren Teilvorsprüngen gebildet sein. Die mehreren Teilvorsprünge können in einen einzelnen Durchbruch oder in verschiedene Teildurchbrüche eingreifen.

Die mehreren Teilvorsprüngen können beabstandet voneinander auf der Außenfläche der Innenwelle angeordnet sein. Alternativ kann ein einzelner Vorsprung vorgesehen sein, der sich auf der Außenfläche der Innenwelle durchgehend erstreckt, insoweit einstückig ausgeführt ist.

Die mehreren Teilvorsprüngen können getrennt voneinander auf der Außenfläche der Innenwelle gebildet sein.

Erfindungsgemäß ist der Vorsprung oder die Teilvorsprünge und die Innenwelle als einstückiges integrales Bauteil ausgebildet.

Der Vorsprung wird mittels eines Materialaufwurfs auf der Außenfläche der Innenwelle gebildet.

Es können mehrere Materialaufwürfe gebildet oder hergestellt sein, beispielsweise beidseitig Enden des Durchbruchs gegenüberliegend. Alternativ oder ergänzend zu Materialaufwürfen kann der Vorsprung mittels eines aufgeklebten, aufgelöteten und / oder aufgeschweißten Bauteils gebildet sein, welches nach dem Anordnen der Profilhülse auf der Innenwelle im Bereich des Durchbruchs auf der Außenfläche der Innenwelle mittels Fügen fixiert wird.

Eine Außenfläche des Vorsprungs kann zumindest abschnittsweise formschlüssig an einer Innenfläche des Durchbruchs anliegen. Die formschlüssige Ausbildung kann an dem Durchbruch umlaufend durchgehend oder unterbrochen ausgebildet sein. Insbesondere kann der Vorsprung in den in axialer Richtung gegenüberliegenden Enden des Durchbruchs formschlüssig an der Innenfläche des Durchbruchs anliegen.

Der Durchbruch kann zumindest abschnittsweise im Bereich eines radial abstehenden Abschnitts einer außenflächigen Profilierung der Profilhülse angeordnet sein. Der Durchbruch kann vollständig im Bereich des radial abstehenden Abschnitts der außenflächigen Profilierung der Profilhülse angeordnet sein. Alternativ kann der Durchbruch ganz oder teilweise im Bereich eines radial zurückgesetzten Abschnitts der außenflächigen Profilierung der Profilhülse angeordnet sein.

Der Vorsprung kann den Durchbruch in radialer Richtung vollständig durchgreifen. Der Vorsprung kann hierbei in Bezug auf den Durchbruch in radialer Richtung außen überstehen. Alternativ ist der Vorsprung mit einer Bauhöhe in radialer Richtung gebildet, die kleiner ist als die Höhe der Wandung im Bereich des Durchbruchs in radialer Richtung.

Der Vorsprung kann einen radial ausgerichteten Flanschabschnitt aufweisen. Der Flanschabschnitt wird als Materialaufwurf hergestellt.

Die Außen- und / oder die Innenwelle können eine Profilierung aufweisen, wobei eine äußere Profilierung auf der Außenseite der Innenwelle und eine innere Profilierung auf der Innenfläche der Außenwelle zueinander korrespondierend gebildet sein können. Beispielsweise können die Profilierungen in radialer Richtung vorstehende und zurückgesetzte Oberflächenabschnitte aufweisen, beispielsweise derart, dass von der Außenfläche der Innenwelle vorstehende Abschnitte in zurückversetzte Bereiche der Innenfläche der Außenwelle eingreifen und umgekehrt, wenn Innenwelle und Außenwelle in einem Überlappungsabschnitt aufeinander geschoben sind, derart, dass zwischen der Innenwelle und der Außenwelle die Profilhülse mit ebenfalls korrespondierender Profilierung angeordnet ist.

Die Innenwelle, die Außenwelle und / oder die Profilhülse können aus unterschiedlichen Materialien oder demselben Material bestehen. Beispielsweise kann eine Herstellung aus Metall wie Stahl oder einem faserverstärkten Material vorgesehen sein. Bevorzugt ist die Profilhülse aus einem Kunststoff gebildet.

Die vorangehend in Verbindung mit der profilierten Hohlwelle erläuterten vorteilhaften Weiterbildungen können im Zusammenhang mit dem Verfahren zum Herstellen *mutatis mutandis* vorgesehen sein.

### Beschreibung von Ausführungsbeispielen

Im Folgenden werden weitere Ausführungsbeispiele unter Bezugnahme auf Figuren einer Zeichnung näher erläutert. Hierbei zeigen:
- Fig. 1: eine schematische perspektivische Darstellung einer Lenkwelle für ein Kraftfahrzeug, wobei eine Innenwelle, eine Außenwelle und eine Profilhülse voneinander getrennt dargestellt sind;
- Fig. 2: eine schematische perspektivische Darstellung eines Abschnitts der Lenkwelle aus Fig. 1, wobei die Profilhülse auf der Innenwelle angeordnet und fixiert ist;
- Fig. 3: eine Detaildarstellung einer Befestigungseinrichtung der Profilhülse auf der Innenhülse;
- Fig. 4: eine schematische Querschnittsdarstellung der Lenkwelle mit Innenwelle, Profilhülse und Außenwelle;
- Fig. 5: eine schematische Darstellung eines Abschnitts der profilierten Hohlwelle mit Profilhülse im Schnitt in Längsrichtung und
- Fig. 6: eine schematische Darstellung zum Fixieren der Profilhülse auf der Außenfläche der Innenwelle.

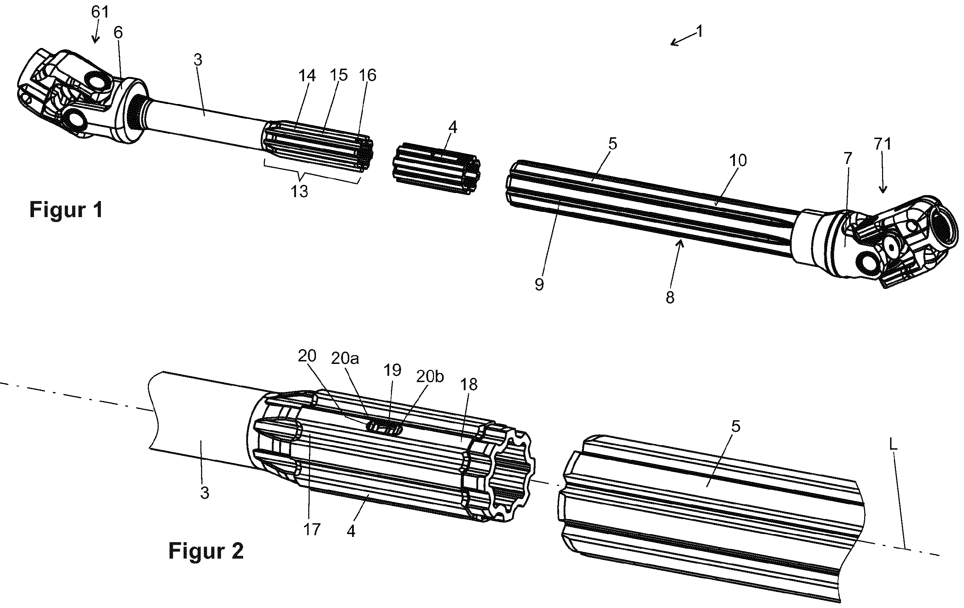

Fig. 1 zeigt eine schematische perspektivische Darstellung einer Lenkwelle 1 für ein Kraftfahrzeug. Die Lenkwelle 1 weist eine Innenwelle 3, einer auf der Innenwelle 3 anzuordnenden Profilhülse 4 sowie einer Außenwelle 5 auf. Die Innenwelle 3 und die Außenwelle 5 sind jeweils als Hohlwelle ausgeführt. Es ist jedoch auch denkbar und möglich, dass die Innenwelle als Vollwelle ausgebildet ist. Die Innenwelle 3 und die Außenwelle 5 können als Hohlwellen aus einem Stahl oder alternativ aus Aluminiumlegierungen, Edelstahl, Faserverbundwerkstoffe oder dergleichen gefertigt sein.

Die Außenwelle 5 und die Innenwelle 3 weisen endseitig jeweils eine Gabel 6, 7 auf, die einen Teil eines Universalgelenks 61, 71 bildet, um die Lenkwelle 1 in einen Lenkstrang zu integrieren. Alternativ kann anstelle einer der Gabeln 6, 7 ein Kopplungsabschnitt zur Anbringung eines Lenkrades vorgesehen sein.

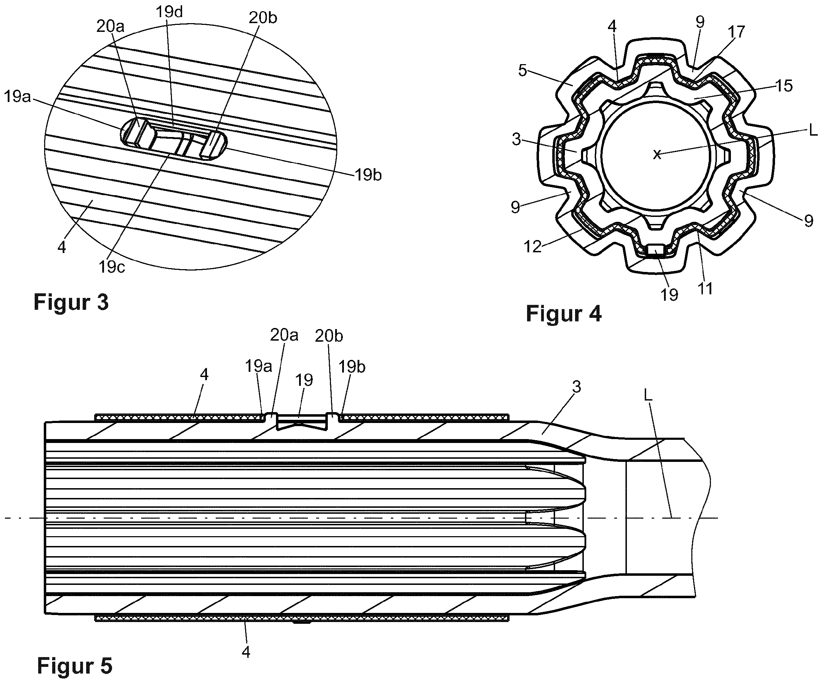

Gemäß Fig. 1 ist die Außenwelle 5 im Bereich eines Abschnitts 8, in welchem die Innenwelle 3 mit der hierauf fixierten Profilhülse 4 (vgl. Fig. 2) eingeschoben wird, profiliert. Hierbei weist die Profilierung der Außenwelle 5 Nuten 9 auf, welche als radial nach Innen vorstehende Abschnitte in Richtung der Längsachse L der Außenwelle 5 verlaufen. Die Nuten 9 auf einer äußeren Umfangsfläche 10 der Außenwelle 5 bilden eine Innenverzahnung 11 auf einer inneren Umfangsfläche 12 der Außenwelle 5 (vgl. Fig. 4).

Fig. 2 ist zu entnehmen, dass ein Endabschnitt 13 der Innenwelle 3, welcher in einem Betriebszustand in die Außenwelle 5 eingesteckt ist, eine Außenverzahnung 14 aufweist, welche mit der Innenverzahnung 11 der Außenwelle 5 korrespondiert. Die Außenverzahnung 14 der Innenwelle 3 ist mit Nuten 15 auf einer äußeren Umfangsfläche 16 der Innenwelle 3 gebildet. Auf der Außenverzahnung 14 der Innenwelle 3 ist die Profilhülse 4 angeordnet, welche sowohl mit der Außenverzahnung 14 der Innenwelle 3 als auch mit der Innenverzahnung 11 der Außenwelle 5 korrespondiert. Die Profilhülse 4 ist auf der Innenwelle 3 fixiert, sodass sich die Profilhülse 4 gemeinsam mit der Innenwelle 3 relativ zu der Außenwelle 5 in dieser bewegen kann.

Um Steifigkeitsanforderungen der Lenkwelle 1 gerecht zu werden, kann zwischen der Innenwelle 3, der Profilhülse 4 und der Außenwelle 5 ein sehr geringes Spiel bestehen, welches quasi als "spielfrei" bezeichnet werden kann. Hierbei ist ein Schiebesitz bereitgestellt, welcher eine Justierung der Länge der Lenkwelle 1 auf einem eher geringen konstanten Kraftniveau erlaubt.

Gemäß Fig. 2 weist die Profilhülse 4 im Bereich eines gegenüber Nuten 17 radial vorstehenden Abschnitts 18 der Profilierung einen Durchbruch 19 auf, in den ein Vorsprung 20 eingreift, der auf der äußeren Umlauf- oder Umfangsfläche 16 der Innenwelle 3 angeordnet und mit zwei Teilvorsprüngen 20a, 20b gebildet ist, die im Bereich gegenüberliegender Enden 19a, 19b des Durchbruchs 19 zur Anlage kommen (vgl. Fig. 3), um die Profilhülse 4 auf der Innenwelle 3 zu fixieren, zumindest in axialer Richtung. Dieses ist im Detail weiter in Fig. 3 zu erkennen.

Fig. 4 zeigt eine Querschnittsdarstellung durch die Lenkwelle 1 im Bereich des Durchbruchs 19. Es ist zu erkennen, dass der Profilierung der Außenwelle 5 mit der Profilierung der Profilhülse 4 und der Profilierung der Innenwelle 3 korrespondiert. So trifft beispielsweise die Nut 9 der Außenwelle 5 auf eine der Nuten 17 der Profilhülse 4 beziehungsweise die Nut 15 der Innenwelle 3. Somit stehen die Innenwelle 3 und die Außenwelle 5 unter Zwischenschaltung der Profilhülse 4 drehmomentenschlüssig im Eingriff.

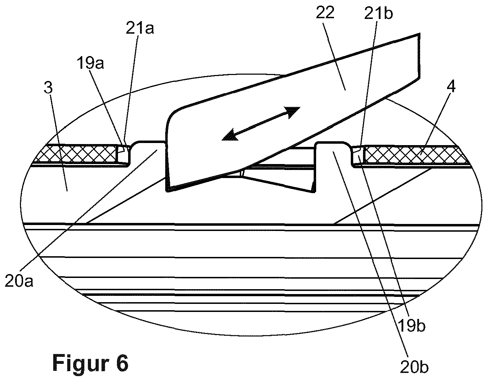

Fig. 5 zeigt eine Darstellung eines Abschnitts der Lenkwelle 1 im Bereich der auf der Innenwelle 3 fixierten Profilhülse 4 im Längsschnitt. Die Teilvorsprünge 20a, 20b sind jeweils als ein Materialaufwurf hergestellt, was in Fig. 6 weiter im Detail gezeigt ist. Radial abstehende Flanschabschnitte 21a, 21b sind gegen die Enden 19a, 19b des Durchbruchs 19 gestellt.

Der Durchbruch 19 ist als ein Langloch ausgeführt, bei dem gegenüberliegende Längsseiten 19c, 19d parallel zur Richtung der Längsachse L der Lenkwelle 1 bzw. der Profilhülse 4 verlaufen.

Gemäß Fig. 6 erfolgt das Ausbilden des Vorsprungs 20 mit den Teilvorsprüngen 20a, 20b nach dem die Profilhülse 4 auf die Innenwelle 3 aufgeschoben ist, im Bereich des Durchbruchs 19 mittels eines Werkzeugs 22, um so die Profilhülse 4 auf der Innenwelle 3 zu fixieren. Anschließend kann die Innenwelle 3 mit der hierauf fixierten Profilhülse 4 in die Außenwelle 5 eingesteckt werden (vgl. Fig. 2) Nach dem Einstecken wird mittels einer plastischen Deformation der Außenwelle 5 eine Auszugssicherung eingeformt, so dass die Innenwelle 3 nicht mehr vollständig aus der Außenwelle 5 herausziehbar ist.

Bevorzugt ist das Werkzeug 22 bzw. die Bewegungsrichtung des Werkzeugs geneigt gegenüber der Längsachse L.

### Bezugszeichenliste

- 1: Lenkwelle
- 3: Innenwelle
- 4: Profilhülse
- 5: Außenwelle
- 6,7: Gabel
- 8: Abschnitt
- 9, 15, 17: Nut von Profilierung
- 10: äußere Umfangsfläche der Außenwelle 5
- 11: Innenverzahnung der Außenwelle 5
- 12: innere Umfangsfläche der Außenwelle 5
- 13: Endabschnitt der Innenwelle 3
- 14: Außenverzahnung der Innenwelle 3
- 16: äußere Umfangsfläche der Innenwelle 3
- 18: radial vorstehender Abschnitt von Profilierung
- 19: Durchbruch
- 19a, 19b: Ende des Durchbruchs 19
- 19c, 19d: Längsseiten des Durchbruchs 19
- 20: Vorsprung
- 20a, 20b: Teilvorsprung
- 21a, 21b: Flanschabschnitte
- 22: Werkzeug
- 61, 71: Universalgelenk

## Patentansprüche

1. Lenkwelle (1) für ein Kraftfahrzeug, mit
- einer Innenwelle (3);
- einer Außenwelle (5);
- einer Profilhülse (4), die auf der Innenwelle (3) angeordnet und hierauf fixiert ist, derart, dass die Innenwelle (3) zusammen mit der Profilhülse (4) gegenüber der Außenwelle (5) in axialer Richtung verlagerbar ist, wobei die Innenwelle (3) und die Außenwelle (5) drehmomentenschlüssig unter Zwischenschaltung der Profilhülse (4) gekoppelt sind,
wobei die Profilhülse (4) einen Durchbruch (19) aufweist, in welchen ein auf einer Außenfläche der Innenwelle (3) angeordneter Vorsprung (20) die Profilhülse (4) in ihrer Lage auf der Innenwelle (3) zumindest in axialer Richtung sichernd eingreift, **dadurch gekennzeichnet, dass** der Vorsprung (20) und die Innenwelle (3) als einstückiges integrales Bauteil ausgebildet sind.

2. Lenkwelle (1) nach Anspruch 1, **dadurch gekennzeichnet, dass** der Durchbruch (19) in einem in Längsrichtung der Profilhülse (4) mittleren Profilhülsenabschnitt angeordnet ist.

3. Lenkwelle (1) nach Anspruch 1 oder 2, **dadurch gekennzeichnet, dass** der Durchbruch (19) mit einem Langloch gebildet ist.

4. Lenkwelle (1) nach mindestens einem der vorangehenden Ansprüche, **dadurch gekennzeichnet, dass** mit dem Vorsprung (20) in Längsrichtung der Profilhülse (4) gegenüberliegende Endanschläge gebildet sind, die Enden (19a, 19b) des Durchbruchs (19) zugeordnet sind und hieran zur Anlage kommen.

5. Lenkwelle (1) nach mindestens einem der vorangehenden Ansprüche, **dadurch gekennzeichnet, dass** der Vorsprung (20) aus mehreren Teilvorsprüngen (20a, 20b) gebildet ist.

6. Lenkwelle (1) nach Anspruch 5, **dadurch gekennzeichnet, dass** die mehreren Teilvorsprüngen (20a, 20b) beabstandet voneinander auf der Außenfläche der Innenwelle (3) angeordnet sind.

7. Lenkwelle (1) nach Anspruch 5 oder 6, **dadurch gekennzeichnet, dass** die mehreren Teilvorsprünge (20a, 20b) getrennt voneinander auf der Außenfläche der Innenwelle (3) gebildet sind.

8. Lenkwelle (1) nach mindestens einem der vorangehenden Ansprüche, **dadurch gekennzeichnet, dass** der Vorsprung (20) mittels eines Materialaufwurfs auf der Außenfläche der Innenwelle (3) gebildet ist.

9. Lenkwelle (1) nach mindestens einem der vorangehenden Ansprüche, **dadurch gekennzeichnet, dass** eine Außenfläche des Vorsprungs (20) zumindest abschnittsweise formschlüssig an einer Innenfläche des Durchbruchs (19) anliegt.

10. Lenkwelle (1) nach mindestens einem der vorangehenden Ansprüche, **dadurch gekennzeichnet, dass** der Durchbruch (19) zumindest abschnittsweise im Bereich eines radial abstehenden Abschnitts (18) einer außenflächigen Profilierung der Profilhülse (4) angeordnet ist.

11. Lenkwelle (1) nach mindestens einem der vorangehenden Ansprüche, **dadurch gekennzeichnet, dass** der Vorsprung (20) den Durchbruch (19) in radialer Richtung vollständig durchgreift.

12. Lenkwelle (1) nach mindestens einem der vorangehenden Ansprüche, **dadurch gekennzeichnet, dass** der Vorsprung (20) einen radial ausgerichteten Flanschabschnitt (21a, 21b) aufweist.

13. Verfahren zum Herstellen einer Lenkwelle (1) für ein Kraftfahrzeug, das Verfahren aufweisend:
- Bereitstellen einer Innenwelle (3);
- Bereitstellen einer Außenwelle (5);
- Anordnen einer Profilhülse (4) auf der Innenwelle (3), wobei die Profilhülse (4) einen Durchbruch (19) aufweist;
- Fixieren der Profilhülse (4) auf der Innenwelle (3), wobei hierbei ein auf einer Außenfläche der Innenwelle (3) angeordneter, als Materialaufwurf hergestellter Vorsprung (20) in dem Durchbruch (19) der Profilhülse (4) angeordnet und so die Profilhülse (4) in ihrer Lage auf der Innenwelle (3) zumindest in axialer Richtung gesichert wird; und
- Einführen der Innenwelle mit der Profilhülse (4) in der Außenwelle (5), derart, dass der Endabschnitt (13) der Innenwelle (3) zusammen mit der Profilhülse (4) in der Außenwelle (5) in axialer Richtung verlagerbar und die Profilhülse (4) hierbei zwischen der Innenwelle (3) und der Außenwelle (5) angeordnet ist.

## Claims

1. Steering shaft (1) for a motor vehicle, having
- an inner shaft (3);
- an outer shaft (5);
- a profiled sleeve (4) which is arranged on the inner shaft (3) and is fixed thereon, in such a way that the inner shaft (3) can be moved together with the profiled sleeve (4) in the axial direction with respect to the outer shaft (5), the inner shaft (3) and the outer shaft (5) being coupled in a torque-transmitting manner with the profiled sleeve (4) connected in between,
the profiled sleeve (4) comprising an aperture (19), into which a projection (20) which is arranged on an outer face of the inner shaft (3) engages in a manner which secures the profiled sleeve (4) in its position on the inner shaft (3) at least in the axial direction, **characterized in that** the projection (20) and the inner shaft (3) are configured as a single-piece integral component.

2. Steering shaft (1) according to Claim 1, **characterized in that** the aperture (19) is arranged in a central profiled sleeve section in the longitudinal direction of the profiled sleeve (4).

3. Steering shaft (1) according to Claim 1 or 2, **characterized in that** the aperture (19) is formed with a slot.

4. Steering shaft (1) according to at least one of the preceding claims, **characterized in that** end stops are formed by way of the projection (20), which end stops lie opposite one another in the longitudinal direction of the profiled sleeve (4), are assigned to ends (19a, 19b) of the aperture (19), and come into contact with the latter.

5. Steering shaft (1) according to at least one of the preceding claims, **characterized in that** the projection (20) is formed from a plurality of part projections (20a, 20b).

6. Steering shaft (1) according to Claim 5, **characterized in that** the plurality of part projections (20a, 20b) are arranged spaced apart from one another on the outer face of the inner shaft (3).

7. Steering shaft (1) according to Claim 5 or 6, **characterized in that** the plurality of part projections (20a, 20b) are formed separately from one another on the outer face of the inner shaft (3) .

8. Steering shaft (1) according to at least one of the preceding claims, **characterized in that** the projection (20) is formed on the outer face of the inner shaft (3) by means of a material bulge.

9. Steering shaft (1) according to at least one of the preceding claims, **characterized in that** an outer face of the projection (20) lies at least in sections against an inner face of the aperture (19) in a positively locking manner.

10. Steering shaft (1) according to at least one of the preceding claims, **characterized in that** the aperture (19) is arranged at least in sections in the region of a radially protruding section (18) of an outerface profiling of the profiled sleeve (4).

11. Steering shaft (1) according to at least one of the preceding claims, **characterized in that** the projection (20) engages through the aperture (19) completely in the radial direction.

12. Steering shaft (1) according to at least one of the preceding claims, **characterized in that** the projection (20) comprises a radially oriented flange section (21a, 21b).

13. Method for producing a steering shaft (1) for a motor vehicle, the method comprising:
- providing of an inner shaft (3);
- providing of an outer shaft (5);
- arranging of a profiled sleeve (4) on the inner shaft (3), the profiled sleeve (4) comprising an aperture (19);
- fixing of the profiled sleeve (4) on the inner shaft (3), a projection (20) which is arranged on an outer face of the inner shaft (3) and which is produced as a material bulge being arranged here in the aperture (19) of the profiled sleeve (4), and the profiled sleeve (4) thus being secured in its position on the inner shaft (3) at least in the axial direction; and
- introducing of the inner shaft with the profiled sleeve (4) into the outer shaft (5), in such a way that the end section (13) of the inner shaft (3) can be moved together with the profiled sleeve (4) in the outer shaft (5) in the axial direction, and the profiled sleeve (4) is arranged here between the inner shaft (3) and the outer shaft (5).

## Revendications

1. Arbre de direction (1) pour un véhicule à moteur, comportant
- un arbre intérieur (3) ;
- un arbre extérieur (5) ;
- une douille profilée (4), qui est disposée sur l'arbre intérieur (3) et fixée sur celui-ci, de telle sorte que l'arbre intérieur (3) soit déplaçable conjointement avec la douille profilée (4) par rapport à l'arbre extérieur (5) dans la direction axiale, l'arbre intérieur (3) et l'arbre extérieur (5) étant accouplés par liaison de transmission de couple par l'intermédiaire de la douille profilée (4),
la douille profilée (4) comprenant une ouverture (19) dans laquelle une saillie (20) disposée sur une surface extérieure de l'arbre intérieur (3) vient en prise de manière à immobiliser la douille profilée (4) dans sa position sur l'arbre intérieur (3) au moins dans la direction axiale, **caractérisé en ce que** la saillie (20) et l'arbre intérieur (3) sont réalisés sous forme de composant intégré d'une seule pièce.

2. Arbre de direction (1) selon la revendication 1, **caractérisé en ce que** l'ouverture (19) est disposée dans une partie de douille profilée centrale dans la direction longitudinale de la douille profilée (4).

3. Arbre de direction (1) selon la revendication 1 ou 2, **caractérisé en ce que** l'ouverture (19) est formée avec un trou oblong.

4. Arbre de direction (1) selon au moins l'une des revendications précédentes, **caractérisé en ce que** des butées de fin de course opposées dans la direction longitudinale de la douille profilée (4) sont formées avec la saillie (20), lesquelles butées sont associées à des extrémités (19a, 19b) de l'ouverture (19) et viennent en contact avec celle-ci.

5. Arbre de direction (1) selon au moins l'une des revendications précédentes, **caractérisé en ce que** la saillie (20) est formée à partir de plusieurs saillies partielles (20a, 20b).

6. Arbre de direction (1) selon la revendication 5, **caractérisé en ce que** les plusieurs saillies partielles (20a, 20b) sont disposées à distance les unes des autres sur la surface extérieure de l'arbre intérieur (3).

7. Arbre de direction (1) selon la revendication 5 ou 6, **caractérisé en ce que** les plusieurs saillies partielles (20a, 20b) sont formées séparément les unes des autres sur la surface extérieure de l'arbre intérieur (3) .

8. Arbre de direction (1) selon au moins l'une des revendications précédentes, **caractérisé en ce que** la saillie (20) est formée au moyen d'un renflement de matière sur la surface extérieure de l'arbre intérieur (3) .

9. Arbre de direction (1) selon au moins l'une des revendications précédentes, **caractérisé en ce qu'**une surface extérieure de la saillie (20) s'appuie au moins dans certaines parties avec complémentarité de forme contre une surface intérieure de l'ouverture (19).

10. Arbre de direction (1) selon au moins l'une des revendications précédentes, **caractérisé en ce que** l'ouverture (19) est disposée au moins dans certaines parties dans la région d'une partie (18) saillante radialement d'un profilage de surface extérieure de la douille profilée (4).

11. Arbre de direction (1) selon au moins l'une des revendications précédentes, **caractérisé en ce que** la saillie (20) traverse complètement l'ouverture (19) dans la direction radiale.

12. Arbre de direction (1) selon au moins l'une des revendications précédentes, **caractérisé en ce que** la saillie (20) comprend une partie de rebord (21a, 21b) orientée radialement.

13. Procédé de fabrication d'un arbre de direction (1) pour un véhicule à moteur, le procédé comprenant :
- la fourniture d'un arbre intérieur (3) ;
- la fourniture d'un arbre extérieur (5) ;
- la disposition d'une douille profilée (4) sur l'arbre intérieur (3), la douille profilée (4) comprenant une ouverture (19) ;
- la fixation de la douille profilée (4) sur l'arbre intérieur (3), une saillie (20) disposée sur une surface extérieure de l'arbre intérieur (3) et fabriquée en tant que renflement de matière étant en l'occurrence disposée dans l'ouverture (19) de la douille profilée (4) et la douille profilée (4) étant ainsi immobilisée dans sa position sur l'arbre intérieur (3) au moins dans la direction axiale ; et
- l'introduction de l'arbre intérieur avec la douille profilée (4) dans l'arbre extérieur (5), de telle sorte que la partie d'extrémité (13) de l'arbre intérieur (3) soit déplaçable conjointement avec la douille profilée (4) dans l'arbre extérieur (5) dans la direction axiale et que la douille profilée (4) soit en l'occurrence disposée entre l'arbre intérieur (3) et l'arbre extérieur (5) .
